# EUROPÄISCHE PATENTSCHRIFT

(11) **EP 1 195 877 B1**
(45) Veröffentlichungstag und Bekanntmachung des Hinweises auf die Patenterteilung: **12.09.2018**
(21) Anmeldenummer: 00810923.3
(22) Anmeldetag: 06.10.2000
(51) Int. Cl.: H02J 1/10, H02H 7/12

(54) **Stromrichtersystem mit durch einen Gleichspannungszwischenkreis verbundenen Stromrichtermodulen sowie Verfahren zum Betrieb**
Inverter system with dc-link connected inverter modules and method of operation
Système d'onduleur avec modules onduleurs connectés par circuit intermédiaire à tension continue et procédé de fonctionnement

(43) Veröffentlichungstag der Anmeldung: 10.04.2002
(73) Patentinhaber: ABB Schweiz AG, 5400 Baden (CH)
(72) Erfinder: Steinke, Jürgen, Dr.-Ing., 79774 Albbruck (DE)
(74) Vertreter: ABB Patent Attorneys

(56) Entgegenhaltungen:
- EP-A- 0 784 375
- DE-A- 19 736 903
- US-A- 5 122 726

## Beschreibung

### TECHNISCHES GEBIET

Die vorliegende Erfindung bezieht sich auf das Gebiet der Leistungselektronik. Sie betrifft ein Stromrichtersystem gemäss dem Oberbegriff des Anspruchs 1 sowie ein Verfahren zum Betrieb eines solchen Systems.

### STAND DER TECHNIK

Werden in einer Industrieanlage mehrere Spannungszwischenkreis-Stromrichter mit gleichem Niveau der Zwischenkreisspannung eingesetzt, kann es vorteilhaft sein, anstelle von Einzelstromrichtern, jeweils bestehend aus Netzstromrichter, Spannungszwischenkreis und Laststromrichter, ein System mit gekoppelten Spannungszwischenkreisen, ein sogenanntes Common-DC-Bus-System, aufzubauen. Dieses setzt sich aus Netzstromrichtermodulen (passiv mit Dioden oder aktiv mit gesteuerten Halbleiterschaltern), einem oder mehreren Zwischenkreismodulen und Laststromrichtermodulen (z.B. Motorspeisung, Generatoreinspeisung, etc.) zusammen.

Vorteile dieses Systems sind z.B. der freie Energieaustausch zwischen den Lastmodulen ohne die Notwendigkeit des Einsatzes von bidirektional wirkenden Netzstromrichtermodulen, Nutzung gemeinsamer Hilfseinrichtungen (Ladevorrichtung für den Zwischenkreis, Überspannungsbegrenzer, Bremssteller, etc.) sowie die Möglichkeit des Einsatzes grösserer, kostengünstiger Module als Netzstromrichter. Hat man z.B. 5 Lastmodule, die ihre Last mit einer Leistung von jeweils 100 kW speisen, kann ein einziges Netzstromrichtermodul von 500 kW das System versorgen. Dadurch werden nicht nur Stromrichterkosten, sondern gegebenenfalls auch Transformatorkosten gespart.

Ein solches System weist allerdings auch Nachteile auf, denen durch geeignete Massnahmen begegnet werden muss. Ein wichtiges Problem dabei ist der Schutz des Systems beim Ausfall eines Stromrichtermoduls. Würde man alle Module ohne weitere Massnahmen an den gemeinsamen Zwischenkreis koppeln, führt ein Kurzschluss in einem einzigen Modul zum Kurzschluss des gemeinsamen Zwischenkreises und damit zum Ausfall des gesamten Systems. Darüber hinaus kann die gegenüber einem Einzelstromrichter höhere Energie im Zwischenkreis zu Schäden im defekten Modul führen, die ein weitaus grösseres Mass annehmen als dies im Einzelstromrichter der Fall wäre.

Eine übliche Lösung dieser Problematik ist es, die einzelnen Stromrichtermodule über eine Sicherung an den gemeinsamen Zwischenkreis zu koppeln. Diese begrenzt die zerstörende Energiemenge, die in das defekte Modul eingebracht wird, und trennt das Modul vom restlichen System ab, so dass dieses weiter betrieben werden kann. Diese Lösung hat jedoch wesentliche Nachteile: Zum einen wirken die Sicherungen so langsam, dass der Betrieb der anderen Module gestört wird. Ein kurzzeitiger Betriebsunterbruch kann dabei in der Regel nicht vermieden werden. Zum anderen wird die Sicherung zerstört und muss ersetzt werden. Dies erhöht die Reparaturzeit, ergibt zusätzliche Reparaturkosten und erhöht auch die Kosten für die Ersatzteilhaltung.

In der EP 0 784 375 A2 ist ein Verfahren und eine Schaltungsanordnung zum Betrieb eines 2-Qudrantenstellers angegeben, wobei der 2-Quadrantensteller Stromrichtermodule und zwei Sammelschienen und einen dadurch gebildeten Gleichspannungszwischenkreis mit einer Gleichspannungszwischenkreiskapazität aufweist. Desweiteren offenbart die DE 197 36 903 A1 einen Umrichter mit einem Gleichrichter, einem Gleichspannungszwischenkreis und einem Wechselrichter, wobei in einer Verbindungsleitung zwischen Gleichrichter und einem Kondensator des Gleichspannungszwischenkreises ein steuerbarer Halbleiterschalter angeordnet ist, der im Störfall des Wechselrichters oder im Falle eines Netzunterbruchs durch entsprechende Ansteuerung geöffnet wird.

### DARSTELLUNG DER ERFINDUNG

Es ist daher Aufgabe der Erfindung, ein Stromrichtersystem mit einer selektiven Abtrennung eines defekten Stromrichtermoduls von dem gemeinsamen Zwischenkreis zu schaffen, bei der ein unterbrechungsfreier Weiterbetrieb der anderen Module am Zwischenkreis möglich ist und bei der das Abtrennmittel nicht zerstört wird, sowie ein Verfahren zu dessen Betrieb anzugeben.

Die Aufgabe wird durch die Gesamtheit der Merkmale der Ansprüche 1 und 9 gelöst.

Der Kern der Erfindung lässt sich mit zwei Schritten beschreiben:

### Erster Schritt:

Jedem Stromrichtermodul wird ein angemessener Anteil der erforderlichen Gleichspannungszwischenkreiskapazität zugeordnet ("verteilter Zwischenkreis"). Dabei erfolgt die Aufteilung typischerweise nach zwei Kriterien: Die einem Stromrichtermodul zugeordneten Kondensatoren ("lokaler Zwischenkreis") sollten mindestens so gross sein, dass sie den von diesem Modul in den Zwischenkreis eingebrachten Wechselstrom tragen können; und die Energie, die in den einem Stromrichtermodul zugeordneten Kondensatoren gespeichert wird, darf nur so gross sein, dass eine Entladung dieser Kondensatoren in das fehlerhafte Modul keine unzulässigen Zerstörungen hervorruft.

Neben den Kondensatoren der lokalen Zwischenkreise gibt es keine weiteren Gleichspannungskondensatoren am Zwischenkreis mit einer Kapazität, die in der Grössenordnung der Kapazitäten der lokal installierten Kondensatoren liegt.

### Zweiter Schritt:

Die Stromrichtermodule mit lokalem Zwischenkreis werden über mindestens einen Schutzschalter (Halbleiterschalter) an die Gleichspannungssammelschienen angekoppelt. Dabei ist der Schutzschalter so angeordnet, dass er einen Stromfluss von der positiven Gleichspannungssammelschiene in den positiven Anschluss des lokalen Zwischenkreises und/oder einen Stromfluss von dem negativen Anschluss des lokalen Zwischenkreises in die negative Gleichspannungssammelschiene unterbrechen kann.

Gemäss einer ersten bevorzugten Ausgestaltung der Erfindung ist wenigstens eines der Stromrichtermodule ein Stromrichtermodul, welches ausschliesslich Energie von seinen Wechselspannungsklemmen in den Gleichspannungszwischenkreis transferiert, und der Schutzschalter dieses Stromrichtermoduls ist eine Halbleiterdiode. Hierdurch kann der Schaltungs- und Steuerungsaufwand entsprechend verringert werden.

Gemäss einer zweiten bevorzugten Ausgestaltung der Erfindung ist wenigstens eines der Stromrichtermodule ein Stromrichtermodul, welches Energie vom Gleichspannungszwischenkreis an seine Wechselspannungsklemmen transferiert, und der Schutzschalter dieses Stromrichtermoduls ist ein steuerbarer Leistungshalbleiterschalter.

Wenn wenigstens eines der Stromrichtermodule ein Mehrpunktstromrichtermodul ist, umfasst der zugehörige lokale Zwischenkreis eine Reihenschaltung von Kondensatoren, deren Verbindungspunkte entsprechende Zwischenpunkte bilden. Prinzipiell brauchen auch Mehrpunktstromrichtermodule nur über die positive und die negative Sammelschiene mit dem System gekoppelt zu werden, da die Zwischenpunkte lokal gebildet werden. Dieses verringert den Aufwand für die Gleichspannungssammelschienen erheblich gegenüber einem System mit einer zentral angeordneten Kondensatoreinheit. Ausserdem wird es damit möglich, Stromrichtermodule von unterschiedlicher Punktzahl (z.B. einen Dreipunktstromrichter und einen Vierpunktstromrichter) gleichzeitig im System zu betreiben.

Wenn mehrere Stromrichtermodule als Mehrpunktstromrichtermodule ausgebildet sind, ist es zur einfacheren Stabilisierung der Zwischenpunkte aber auch möglich, dass zur Verbindung der Zwischenpunkte in den lokalen Zwischenkreisen entsprechende Zwischenpunktsammelschienen vorgesehen sind. Insbesondere sollten dann bei einer Anzahl von n Sammelschienen (Gleichspannungssammelschienen und Zwischenpunktsammelschienen) in wenigstens (n-1) Verbindungen zwischen den lokalen Zwischenkreisen und den Sammelschienen Schutzschalter angeordnet sein. In einem System mit mehreren Dreipunktstromrichtern gäbe es z.B. 3 Sammelschienen, es müssten somit 2 Schutzschalter für jedes Modul eingesetzt werden.

Durch die schnelle Unterbrechung der Verbindung zwischen den Gleichspannungssammelschienen und dem defekten Modul ist im Fehlerfall ein Weiterbetrieb des restlichen Systems möglich. Wenn die Stromrichtermodule mit den lokalen Zwischenkreisen und den Schutzschaltern über zusätzliche Trennmittel an die Sammelschienen angeschlossen sind, welche eine galvanische Trennung der Stromrichtermodule von den Sammelschienen ermöglichen, kann nach Eintreten eines Defektes das defekte Modul galvanisch vom System getrennt, anschliessend repariert und danach wieder auf das System aufgeschaltet werden.

Weitere Ausführungsformen ergeben sich aus den abhängigen Ansprüchen.

### KURZE ERLÄUTERUNG DER FIGUREN

Die Erfindung soll nachfolgend anhand von Ausführungsbeispielen im Zusammenhang mit der Zeichnung näher erläutert werden. Es zeigen
- Fig. 1: das Schaltschema eines ersten Ausführungsbeispiels der Erfindung mit verschiedenen Zweipunkt-Stromrichtermodulen;
- Fig. 2: das Schaltschema eines zweiten Ausführungsbeispiels der Erfindung mit vier Dreipunkt-Stromrichtermodulen und einem Vierpunkt-Stromrichtermodul ohne Verbindung der Zwischenpunkte;
- Fig. 3: das Schaltschema eines dritten Ausführungsbeispiels der Erfindung mit fünf Dreipunkt-Stromrichtermodulen, deren Zwischenpunkte durch eine Zwischenpunktsammelschiene untereinander verbunden sind; und
- Fig. 4: das Schaltschema eines vierten Ausführungsbeispiels der Erfindung, bei dem die Anordnung gemäss Fig. 1 mit zusätzlichen Trennmitteln zur galvanischen Trennung der Module vom Zwischenkreis erweitert worden ist.

### WEGE ZUR AUSFÜHRUNG DER ERFINDUNG

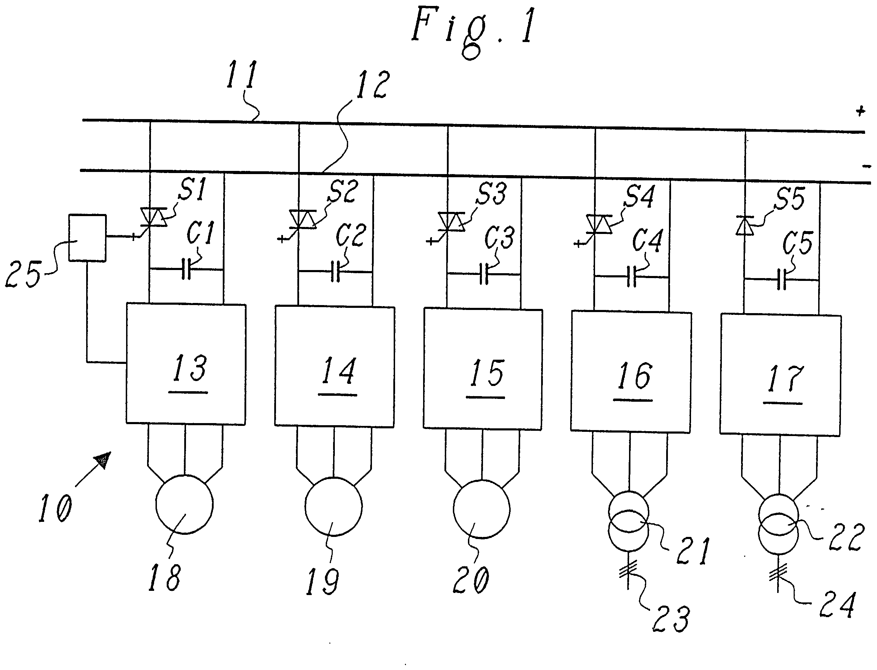

In Fig. 1 ist das Schaltschema eines ersten Ausführungsbeispiels der Erfindung wiedergegeben. Das Stromrichtersystem 10 umfasst insgesamt fünf beispielhafte Stromrichtermodule 13,..,17, die mit ihren Gleichspannungsklemmen an zwei gemeinsame Gleichspannungssammelschienen 11 und 12 angeschlossen sind. Das Stromrichtermodul 13 ist beispielsweise ein Laststromrichtermodul bzw. Antriebsstromrichtermodul für eine Asynchronmaschine 18 mit einer Antriebsleistung von 3 MW. Das Stromrichtermodul 14 ist ebenfalls ein Laststromrichtermodul bzw. Antriebsstromrichtermodul für eine Asynchronmaschine 19 mit einer Antriebsleistung von 2 MW. Das Stromrichtermodul 15 ist ein Laststromrichtermodul bzw. Antriebsstromrichtermodul für eine Synchronmaschine 20 mit einer Antriebsleistung von 5 MW. Das Stromrichtermodul 16 ist ein aktives Netzstromrichtermodul mit einer Leistung von 5 MW. Das Stromrichtermodul 17 ist ein passives Netzstromrichtermodul (Gleichrichter) mit einer Leistung von ebenfalls 5 MW. Beide Netzstromrichtermodule 16, 17 sind mit ihren Wechselspannungsklemmen über einen 3-phasigen Netztransformator 21 bzw. 22 an ein 3-phasiges Netz 23 bzw. 24 angeschlossen. Die Gesamtleistung von 10 MW der beiden Netzstromrichtermodule 16 und 17 wird über den mittels der Gleichspannungssammelschienen 11, 12 gebildeten Gleichspannungszwischenkreis aufgeteilt auf die Laststromrichter 13,..,15, deren Gesamtleistung 3+2+5 = 10 MW beträgt. Diese Systemkonfiguration stellt nur ein Beispiel dar, bei dem alle Stromrichtermodule bis auf das Netzstromrichtermodul 17 mit steuerbaren Leistungshalbleiterbauelementen in Brückenschaltung ausgestattet sind. Selbstverständlich sind im Rahmen der Erfindung andere Konfigurationen mit einer anderen Anzahl, Art und Leistung von Netzstromrichtermodulen und Laststromrichtermodulen möglich

Anstelle einer zentralen Gleichspannungszwischenkreiskapazität sind nun jedem der Stromrichtermodule 13,..,17 erfindungsgemäss einzelne Teilkapazitäten (in Fig. 1 symbolisch repräsentiert durch die Kondensatoren C1,..,C5) zugeordnet, die zwischen die Verbindungsleitungen vom Stromrichtermodul zu den Gleichspannungssammelschienen 11, 12 geschaltet sind und einen lokalen Zwischenkreis bilden. Die Aufteilung der Gesamtkapazität in die Teilkapazitäten erfolgt typischerweise nach zwei Kriterien: Die einem Stromrichtermodul zugeordneten (üblicherweise mehreren) Kondensatoren sollten mindestens so gross sein, dass sie den von diesem Modul in den Zwischenkreis eingebrachten Wechselstrom tragen können; und die Energie, die in den einem Stromrichtermodul zugeordneten Kondensatoren gespeichert wird, darf nur so gross sein, dass eine Entladung dieser Kondensatoren in das fehlerhafte Modul keine unzulässigen Zerstörungen hervorruft.

Die Stromrichtermodule 13,..,17 mit ihrem lokalen Zwischenkreis (Kondensatoren C1,..,C5) werden erfindungsgemäss über mindestens einen Schutzschalter S1,..,S5 in Form eines Halbleiterschalters ("Schutzhalbleiterschalter') an die Gleichspannungssammelschienen 11, 12 angekoppelt. Dabei sind die Schutzschalter (Halbleiterschalter) S1,..,S5 jeweils so angeordnet, dass sie einen Stromfluss von der positiven Gleichspannungssammelschiene 11 in den positiven Anschluss des lokalen Zwischenkreises unterbrechen können - wie dies in Fig. 1 gezeigt ist - und/oder einen Stromfluss von dem negativen Anschluss des lokalen Zwischenkreises in die negative Gleichspannungssammelschiene 12 unterbrechen können.

Handelt es sich bei dem Stromrichtermodul um ein Modul, dass nur Energie von den Wechselspannungsklemmen diesen Moduls in den Gleichspannungszwischenkreis transferiert (Gleichrichter) - wie dies beim passiven (mit Dioden bestückten) Netzstromrichtermodul 17 in Fig. 1 der Fall ist, kann der Schutzschalter (Halbleiterschalter S5) eine Diode sein. Wird im Stromrichtermodul Energie vom Gleichspannungszwischenkreis an die Wechselspannungsklemmen transferiert-wie dies bei den aktiven Stromrichtermodulen 13,..,16 in Fig. 1 der Fall ist, muss der Schutzschalter (Halbleiterschalter) ein aktiver Schalter (z.B. IGBT, GTO, IGCT (Integrated Gate Commutated Thyristor) oder dgl.) sein. Im Falle eines aktiven Halbleiterschalters sollte im zugehörigen Stromrichtermodul eine Defekterfassung installiert sein, die den Defekt schnell genug erkennt, um den aktiven Halbleiterschalter dann über eine Ansteuereinrichtung 25 auszuschalten, bevor der Strom zwischen den Gleichspannungssammelschienen 11, 12 und dem lokalen Zwischenkreis grösser geworden ist als der zulässige abschaltbare Strom des Schutzhalbleiterschalters. In Fig. 1 ist dies exemplarisch für das Stromrichtermodul 13 mit dem Schutzschalter S1 wiedergegeben. Die entsprechenden Ansteuereinrichtungen der anderen (aktiven) Schutzschalter S2,..,S4 sind der Einfachheit halber weggelassen. Der (passive) Schutzschalter S5 benötigt als Diode naturgemäss keine Ansteuereinrichtung.

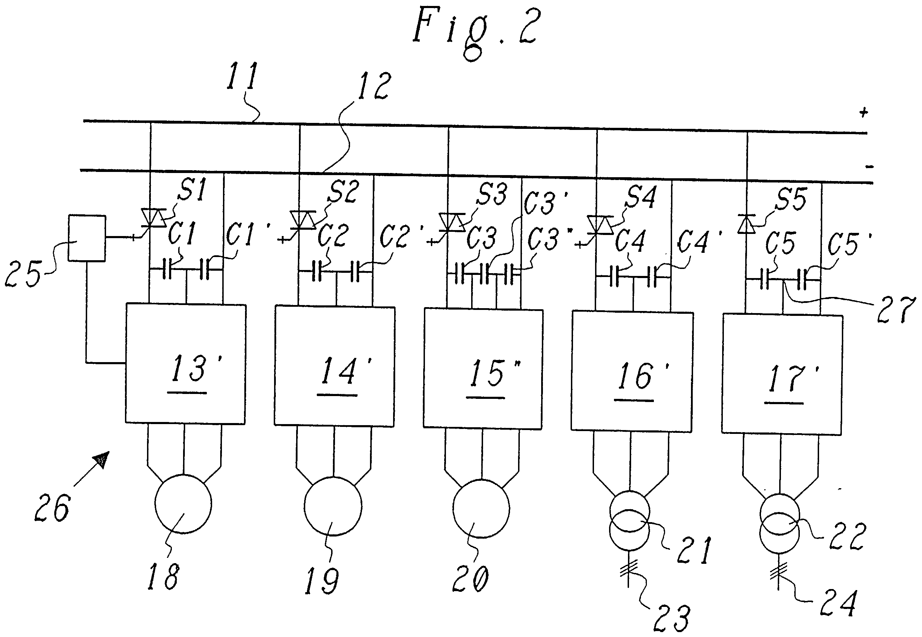

Werden gemäss Fig. 2 im Stromrichterystem 26 Stromrichtermodule 13',..,17' mit Mehrpunktstromrichter eingesetzt, bestehen die lokalen Zwischenkreise aus funktional in Reihe geschalteten Kondensatoren C1, C1';...; C5, C5', deren Zwischenverbindungspunkte 27 (d.h. die Punkte, die weder den positiven noch den negativen Zwischenkreisanschluss bilden) von Stromrichtermodul genutzt werden. Der herkömmliche Stromrichter (Fig. 1) wird auch als Zweipunktstromrichter bezeichnet und hat funktional keine Zwischenpunkte. Der weit verbreitete Dreipunktstromrichter (13', 14', 16' und 17' in Fig. 2) hat funktional einen Zwischenpunkt, also zwei in Reihe geschaltete Kondensatoren. Der Vierpunktstromrichter (15" in Fig. 2) hat 2 Zwischenverbindungspunkte und entsprechend 3 funktional in Reihe geschaltete Kondensatoren (C3, C3' und C3"). Der n-Punktstromrichter hat allgemein (n-2) Zwischenverbindungspunkte und entsprechend funktional (n-1) in Reihe geschaltete Kondensatoren.

Prinzipiell brauchen auch Mehrpunktstromrichtermodule nur über die positive und die negative Gleichspannungssammelschiene 11 und 12 mit dem System gekoppelt zu werden, wie dies in dem Beispiel der Fig. 2 der Fall ist, da die Zwischenverbindungspunkte lokal gebildet werden. Dieses verringert den Aufwand für die Gleichspannungssammelschienen 11, 12 erheblich gegenüber einem System mit einer zentral angeordneten Kondensatoreinheit. Ausserdem wird es damit möglich, Stromrichtermodule von unterschiedlicher Punktzahl (z.B. einen Dreipunktstromrichter 14' und einen Vierpunktstromrichter 15") gleichzeitig im System zu betreiben.

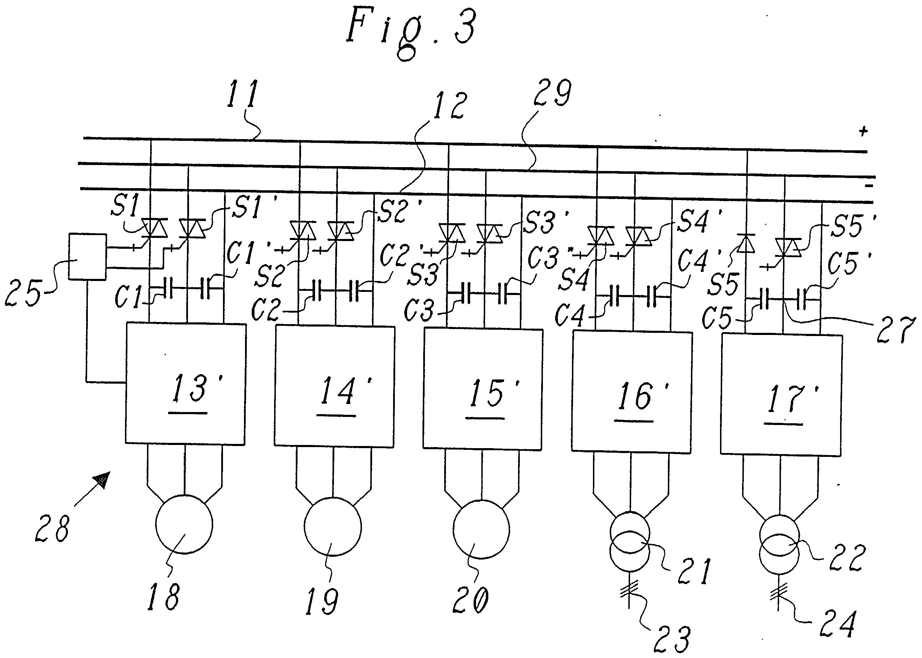

Wird gemäss Fig. 3 zur einfacheren Stabilisierung der Zwischenpunkte 27 trotzdem eine Verbindung über zusätzliche Zwischenpunktsammelschienen 29 gewünscht, müssen Schutzschalter bzw. Schutzhalbleiterschalter S1, S1';...;S5, S5' in mindestens (n-1) der n Verbindungen zu den Sammelschienen geeignet eingefügt werden. In einem System mit mehreren Dreipunktstromrichtern 13',..,17' (Fig. 3) gäbe es z.B. im letzteren Fall 3 Sammelschienen 11, 12 und 29, es müssten somit 2 Schutzhalbleiterschalter S1, S1';...;S5, S5' für jedes Stromrichtermodul 13',..,17' eingesetzt werden.

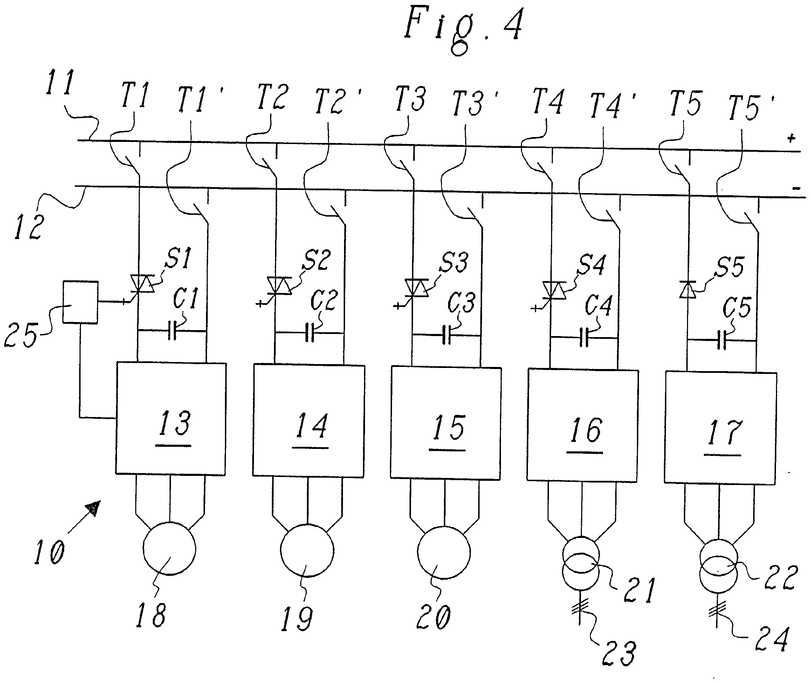

Durch die schnelle Unterbrechung der Verbindung zwischen den Gleichspannungssammelschienen 11, 12 und dem defekten Stromrichtermodul mittels der Schutzschalter ist im Fehlerfall ein Weiterbetrieb des restlichen Systems möglich. Fügt man gemäss Fig. 4 am Anschlusspunkt eines Stromrichtermoduls an die Gleichspannungssammelschiene jeweils noch ein Trennmittel T1, T1';...;T5, T5', z.B. in Form eines mechanischen Schalters, ein, mit dem nach Eintreten des Defektes das Stromrichtermodul galvanisch vom System getrennt werden kann, ist es möglich, das defekte Modul anschliessend zu reparieren und danach wieder auf das System aufzuschalten.

### BEZUGSZEICHENLISTE

- 10,26,28: Stromrichtersystem
- 11,12: Gleichspannungssammelschiene
- 13,..,15: Laststromrichtermodul
- 13',..,15',15": Laststromrichtermodul
- 16: Netzstromrichtermodul (aktiv)
- 17: Netzstromrichtermodul (passiv)
- 18, 19: Asynchronmaschine (ASM)
- 20: Synchronmaschine (SM)
- 21,22: Netztransformator
- 23,24: Netz (3-phasig)
- 25: Ansteuereinrichtung
- 27: Zwischenverbindungspunkt
- 29: Zwischenpunktsammelschiene
- C1,..,C5: Kondensator (lokaler Zwischenkreis)
- C1',..,C5',C3": Kondensator (lokaler Zwischenkreis)
- T1,..,T5: Trennmittel (galvanisch)
- T1',..,T5': Trennmittel (galvanisch)
- S1,..,S5: Schutzschalter (Halbleiterschalter)
- S1',..,S5': Schutzschalter (Halbleiterschalter)

## Patentansprüche

1. Stromrichtersystem (10, 26, 28) mit einer Mehrzahl von einzelnen Stromrichtermodulen (13,..,15; 13',..,15'; 15"; 16, 17), die als Laststromrichtermodule (13,..,15; 13',..,15'; 15") oder Netzstromrichtermodule (16, 17) ausgebildet sind und über einen Gleichspannungszwischenkreis (11, 12; 29; C1,..,C5; C1'...,C5'; C3") miteinander in Verbindung stehen, welcher Gleichspannungszwischenkreis (11, 12; 29; C1,..,C5; C1',..,C5'; C3") zwei Gleichspannungssammelschienen (11, 12) und eine zwischen den Gleichspannungssammelschienen (11, 12) angeordnete Gleichspannungszwischenkreiskapazität (C1,..,C5; C1',..,C5'; C3") umfasst, wobei die Gleichspannungszwischenkreiskapazität (C1,..,C5; C1',..,C5'; C3") in eine der Anzahl der Stromrichtermodule (13,..,15; 13',..,15'; 15"; 16, 17) entsprechende Anzahl von Teilen aufgeteilt ist, jedem der Stromrichtermodule (13,..,15; 13',..,15'; 15"; 16, 17) ein Teil der Gleichspannungszwischenkreiskapazität (C1,..,C5; C1',..,C5'; C3") zugeordnet ist, die einen lokalen Zwischenkreis bildet, und die Stromrichtermodule (13,..,15; 13',..,15'; 15"; 16, 17) mit ihren lokalen Zwischenkreisen durch wenigstens einen Schutzschalter (S1,..,S5; S1',..,S5'), insbesondere in Form eines Halbleiterschalters, an die Gleichspannungssammelschienen (11, 12) angekoppelt sind,
**dadurch gekennzeichnet,**
**dass** wenigstens eines der Stromrichtermodule (13,..,15; 13',..,15'; 15"; 16, 17) ein Stromrichtermodul (17, 17') ist, welches ausschliesslich Energie von seinen Wechselspannungsklemmen in den Gleichspannungszwischenkreis (11, 12; 29; C1,..,C5; C1',..,C5'; C3") transferiert und der Schutzschalter (S5) dieses Stromrichtermoduls (17, 17') eine Halbleiterdiode ist.

2. Stromrichtersystem nach Anspruch 1, **dadurch gekennzeichnet, dass** wenigstens eines der Stromrichtermodule (13,..,15; 13',..,15'; 15"; 16, 17) ein Stromrichtermodul (13,..,15; 13',..,15'; 15"; 16) ist, welches Energie vom Gleichspannungszwischenkreis (11, 12; 29; C1,..,C5; C1',..,C5'; C3") an seine Wechselspannungsklemmen transferiert, und dass der Schutzschalter (S1,..,S4) dieses Stromrichtermoduls (17, 17') ein steuerbarer Leistungshalbleiterschalter ist.

3. Stromrichtersystem nach Anspruch 2, **dadurch gekennzeichnet, dass** der Schutzschalter (S1,..,S4) durch eine Ansteuereinrichtung (25) angesteuert wird, welche mit dem zugehörigen Stromrichtermodul (13,..,15; 13',..,15'; 15"; 16) in Wirkverbindung steht.

4. Stromrichtersystem nach einem der Ansprüche 1 bis 3, **dadurch gekennzeichnet, dass** wenigstens eines der Stromrichtermodule (13,..,15; 13',..,15'; 15"; 16, 17) ein Mehrpunktstromrichtermodul (13',..,17'; 15") ist, und dass der zugehörige lokale Zwischenkreis eine Reihenschaltung von Kondensatoren (C1, C1';...;C5, C5') umfasst, deren Verbindungspunkte entsprechende Zwischenpunkte (27) bilden.

5. Stromrichtersystem nach Anspruch 4, **dadurch gekennzeichnet, dass** mehrere Stromrichtermodule als Mehrpunktstromrichtermodule (13',..,17'; 15") ausgebildet sind, und dass zur Verbindung der Zwischenpunkte (27) in den lokalen Zwischenkreisen entsprechende Zwischenpunktsammelschienen (29) vorgesehen sind.

6. Stromrichtersystem nach Anspruch 5, **dadurch gekennzeichnet, dass** bei einer Anzahl von n Sammelschienen (Gleichspannungssammelschienen 11, 12 und Zwischenpunktsammelschienen 29) in wenigstens (n-1) Verbindungen zwischen den lokalen Zwischenkreisen und den Sammelschienen Schutzschalter (S1, S1';...;S5, S5') angeordnet sind.

7. Stromrichtersystem nach einem der Ansprüche 1 bis 6, **dadurch gekennzeichnet, dass** die Stromrichtermodule (13,..,15; 13',..,15'; 15"; 16, 17) mit den lokalen Zwischenkreisen und den Schutzschaltern (S1, S1';...;S5, S5') über zusätzliche Trennmittel (T1,..,T5; T1',..,T5') an die Sammelschienen (11, 12; 29) angeschlossen sind, weiche Trennmittel (T1,..,T5; T1',..,T5') eine galvanische Trennung der Stromrichtermodule (13,..,15; 13',..,15'; 15"; 16, 17) von den Sammelschienen (11, 12; 29) ermöglichen.

8. Verfahren zum Betrieb eines Stromrichtersystems nach Anspruch 7, **dadurch gekennzeichnet, dass** nach dem Eintreten eines Defektes an einem der Stromrichtermodule (13,..,15; 13',..,15'; 15"; 16, 17) und Oeffnen des oder der zugehörigen Schutzschalter(s) das defekte Stromrichtermodul durch die zugehörigen Trennmittel galvanisch vom System getrennt wird.

9. Verfahren nach Anspruch 8, **dadurch gekennzeichnet, dass** nach der galvanischen Trennung vom System das defekte Stromrichtermodul repariert und danach wieder auf das System aufgeschaltet wird.

## Claims

1. Converter system (10, 26, 28) having a number of individual converter modules (13, ..., 15; 13', ..., 15'; 15"; 16, 17), which are in the form of load converter modules (13, ..., 15; 13', ..., 15'; 15") or power supply system converter modules (16, 17) and are connected to one another via a DC voltage intermediate circuit (11, 12; 29; C1, ..., C5; C1', ..., C5'; C3"), which DC voltage intermediate circuit (11, 12; 29; C1, ..., C5; C1', ..., C5'; C3") has two DC voltage busbars (11, 12) and a DC voltage intermediate circuit capacitance (C1, ..., C5; C1', ..., C5'; C3") arranged between the DC voltage busbars (11, 12), wherein the DC voltage intermediate circuit capacitance (C1, ..., C5; C1', ..., C5'; C3") is subdivided into a number of parts corresponding to the number of converter modules (13, ..., 15; 13', ..., 15', 15"; 16, 17), each of the converter modules (13, ..., 15; 13', ..., 15'; 15"; 16, 17) is associated with a portion of the DC voltage intermediate circuit capacitance (C1, ..., C5; C1', ..., C5'; C3") which forms a local intermediate circuit, and the converter modules (13, ..., 15; 13', ..., 15'; 15"; 16, 17) are coupled together with their local intermediate circuits to the DC voltage busbars (11, 12) by means of at least one protective switch (S1, ..., S5; S1', ..., S5'),
in particular in the form of a semiconductor switch **characterized in that** at least one of the converter modules (13, ..., 15; 13', ..., 15'; 15"; 16, 17) is a converter module (17, 17') which exclusively transfers power from its AC voltage terminals to the DC voltage intermediate circuit (11, 12; 29; C1, ..., C5; C1', ..., C5'; C3"), and the protective switch (S5) for this converter module (17, 17') is a semiconductor diode.

2. Converter system according to Claim 1, **characterized in that** at least one of the converter modules (13, ..., 15; 13', ..., 15'; 15"; 16, 17) is a converter module (13, ..., 15; 13', ..., 15'; 15"; 16) which transfers power from the DC voltage intermediate circuit (11, 12; 29; C1, ..., C5; C1', ..., C5'; C3") to its AC voltage terminals, and **in that** the protective switch (S1, ..., S4) in this converter module (17, 17') is a controllable power semiconductor switch.

3. Converter system according to Claim 2, **characterized in that** the protective switch (S1, ..., S4) is driven by a drive device (25) which is operatively connected to the associated converter module (13, ..., 15; 13', ..., 15'; 15"; 16).

4. Converter system according to one of Claims 1 to 3, **characterized in that** at least one of the converter modules (13, ..., 15; 13', ..., 15'; 15"; 16, 17) is a multipoint converter module (13', ..., 17'; 15"), and **in that** the associated local intermediate circuit has a series circuit of capacitors (C1, C1'; ...; C5, C5'), whose junction points form corresponding intermediate points (27).

5. Converter system according to Claim 4, **characterized in that** a number of converter modules are in the form of multipoint converter modules (13', ..., 17'; 15"), and **in that** corresponding intermediate point busbars (29) are provided for connecting the intermediate points (27) in the local intermediate circuits.

6. Converter system according to Claim 5, **characterized in that**, if the number of busbars (DC voltage busbars 11, 12 and intermediate point busbars 29) is n, protective switches (S1, S1'; ...; S5, S5') are arranged in at least (n-1) junctions between the local intermediate circuits and the busbars.

7. Converter system according to one of Claims 1 to 6, **characterized in that** the converter modules (13, ..., 15; 13', ..., 15'; 15"; 16, 17) are connected, together with the local intermediate circuits and the protective switches (S1, S1'; ...; S5, S5'), via additional isolating means (T1, ..., T5; T1', ..., T5') to the busbars (11, 12; 29), which isolating means (T1, ..., T5; T1', ..., T5') allow galvanic isolation between the converter modules (13, ..., 15; 13', ..., 15'; 15"; 16, 17) and the busbars (11, 12; 29).

8. Method for operation of a converter system according to Claim 7, **characterized in that**, when a defect occurs in one of the converter modules (13, ..., 15; 13', ..., 15'; 15"; 16, 17) and the associated protective switch or switches opens or open, the defective converter module is isolated galvanically from the system by the associated isolating means.

9. Method according to Claim 8, **characterized in that**, once the system has been isolated galvanically, the defective converter module is repaired, and is then reconnected to the system.

## Revendications

1. Système de convertisseurs de courant (10, 26, 28) comprenant une pluralité de modules convertisseurs de courant individuels (13,..., 15 ; 13',..., 15' ; 15" ; 16, 17) qui sont conçus en tant que modules convertisseurs de courant de charge (13, ..., 15 ; 13',..., 15' ; 15") ou modules convertisseurs de courant de réseau (16, 17) et qui sont reliés entre eux par un circuit intermédiaire à tension continue (11, 12 ; 29 ; C1,..., C5 ; C1',..., C5' ; C3"), lequel circuit intermédiaire à tension continue (11, 12 ; 29 ; C1,..., C5 ; C1',..., C5' ; C3") comporte deux barres collectrices à tension continue (11, 12) et un condensateur de circuit intermédiaire à tension continue (C1, ..., C5 ; C1', ..., C5' ; C3") disposé entre les barres collectrices à tension continue (11, 12), le condensateur de circuit intermédiaire à tension continue (C1, ..., C5 ; C1', ..., C5' ; C3") étant divisé en un nombre de parties qui correspond au nombre des modules convertisseurs de courant (13, ..., 15 ; 13',..., 15' ; 15" ; 16, 17), une partie du condensateur de circuit intermédiaire à tension continue (C1, ..., C5 ; C1', ..., C5' ; C3") étant associée à chacun des modules convertisseurs de courant (13, ..., 15 ; 13',..., 15' ; 15" ; 16, 17), lequel condensateur forme un circuit intermédiaire local, et les modules convertisseurs de courant (13, ..., 15 ; 13',..., 15' ; 15" ; 16, 17) munis de leurs circuits intermédiaires locaux étant accouplés, par le biais d'au moins un disjoncteur de protection (S1, ..., S5 ; S1', ..., S5'), se présentant en particulier sous la forme d'un disjoncteur à semi-conducteur, aux barres collectrices à tension continue (11, 12),
**caractérisé en ce que**
au moins un des modules convertisseurs de courant (13, ..., 15 ; 13', ..., 15' ; 15" ; 16, 17) est un module convertisseur de courant (17, 17') qui transfère exclusivement de l'énergie de ses bornes de tension alternative dans le circuit intermédiaire à tension continue (11, 12 ; 29 ; C1, ..., C5 ; C1', ..., C5' ; C3") et le disjoncteur de protection (S5) de ce module convertisseur de courant (17, 17') est une diode à semi-conducteur.

2. Système de convertisseurs de courant selon la revendication 1, **caractérisé en ce qu'**au moins un des modules convertisseurs de courant (13, ..., 15 ; 13', ..., 15' ; 15" ; 16, 17) est un module de convertisseur de courant (13, ..., 15 ; 13', ..., 15' ; 15" ; 16) qui transfère de l'énergie du circuit intermédiaire à tension continue (11, 12 ; 29 ; C1, ..., C5 ; C1', ..., C5' ; C3") à ses bornes de tension alternative et **en ce que** le disjoncteur de protection (S1, ..., S4) de ce module convertisseur de courant (17, 17') est un disjoncteur à semi-conducteur de puissance commandable.

3. Système de convertisseurs de courant selon la revendication 2, **caractérisé en ce que** le disjoncteur de protection (S1, ... S4) est commandé par un dispositif de commande (25) qui relié fonctionnellement au module convertisseur de courant associé (13, ..., 15 ; 13', ..., 15' ; 15" ; 16).

4. Système de convertisseurs de courant selon l'une des revendications 1 à 3, **caractérisé en ce qu'**au moins un des modules convertisseurs de courant (13, ..., 15 ; 13', ..., 15' ; 15" ; 16, 17) est un module convertisseur multipoints (13', ..., 17' ; 15"), et **en ce que** le circuit intermédiaire local associé comporte un circuit série de condensateurs (C1, C1' ; ... ; C5, C5') dont les points de liaison forment des points intermédiaires (27) correspondants.

5. Système de convertisseurs de courant selon la revendication 4, **caractérisé en ce qu'**une pluralité de modules convertisseurs de courant sont conçus en tant que modules convertisseurs multipoints (13", ..., 17' ; 15") et **en ce que** des barres collectrices de point intermédiaire (29) correspondantes sont prévues dans les circuits intermédiaires locaux pour relier les points intermédiaires (27).

6. Système de convertisseurs de courant selon la revendication 5, **caractérisé en ce que** des disjoncteurs de protection (S1, S1' ; ... ; S5, S5") sont disposés dans un nombre n de barres collectrices (barres collectrices à tension continue 11, 12 et barres collectrices de point intermédiaire 29) dans au moins (n-1) liaisons entre les circuits intermédiaires locaux et les barres collectrices.

7. Système de convertisseurs de courant selon l'une des revendications 1 à 6, **caractérisé en ce que** les modules convertisseurs de courant (13, ..., 15 ; 13', ..., 15" ; 15" ; 16, 17), comportant les circuits intermédiaires locaux et les disjoncteurs de protection (S1, S1' ; ...; S5, S5"), sont raccordés aux barres collectrices (11, 12 ; 29) par le biais de moyens de séparation supplémentaires (T1, ..., T5 ; T1', ..., T5'), lesquels moyens de séparation (T1, ..., T5 ; T1', ..., T5') permettent une séparation galvanique des modules convertisseurs de courant (13, ..., 15 ; 13', ..., 15' ; 15" ; 16, 17) des barres collectrices (11, 12 ; 29).

8. Procédé de fonctionnement d'un système de convertisseurs de courant selon la revendication 7, **caractérisé en ce que**, après l'apparition d'un défaut au niveau de l'un des modules convertisseurs de courant (13, ..., 15 ; 13', ..., 15' ; 15" ; 16, 17) et l'ouverture du ou des disjoncteurs associés, le module convertisseur de courant défectueux est isolé galvaniquement du système par les moyens de séparation associés.

9. Procédé selon la revendication 8, **caractérisé en ce que**, après la séparation galvanique du système, le module convertisseur de courant défectueux est réparé puis reconnecté au système.
